# EUROPEAN PATENT APPLICATION

(11) **EP 4 697 797 A1**
(43) Date of publication of application: **18.02.2026**
(21) Application number: 24789120.3
(22) Date of filing: 12.04.2024
(51) Int. Cl.: H04W 28/16, H04W 60/04, H04L 41/0894, H04W 84/06

(54) **SATELLITE COMMUNICATION**

(30) Priority: 14.04.2023 US 202363459267 P
(71) Applicant: LG Electronics Inc., Yeongdeungpo-gu Seoul 07336 (KR)
(72) Inventor: KIM, Hyunsook, Seoul 06772 (KR)
(74) Representative: Frenkel, Matthias Alexander
(86) International application number: PCT/KR2024/095698
(87) International publication number: WO 2024/215180

(57) **Abstract**

One disclosure of the present disclosure provides a method for an AF to perform communication. The method may comprise the steps of: transmitting a request message related to parameter provision to a first network entity of a core network via an NEF; and receiving the message from a second network entity or the NEF or the first network entity of the core network.

## Description

### TECHNICAL FIELD

The present disclosure relates to mobile communication.

### BACKGROUND ART

3rd generation partnership project (3GPP) long-term evolution (LTE) is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

Work has started in international telecommunication union (ITU) and 3GPP to develop requirements and specifications for new radio (NR) systems. 3GPP has to identify and develop the technology components needed for successfully standardizing the new RAT timely satisfying both the urgent market needs, and the more long-term requirements set forth by the ITU radio communication sector (ITU-R) international mobile telecommunications (IMT)-2020 process. Further, the NR should be able to use any spectrum band ranging at least up to 100 GHz that may be made available for wireless communications even in a more distant future.

The NR targets a single technical framework addressing all usage scenarios, requirements and deployment scenarios including enhanced mobile broadband (eMBB), massive machine-type-communications (mMTC), ultra-reliable and low latency communications (URLLC), etc. The NR shall be inherently forward compatible.

Satellite communication has been introduced. However, there is a problem that the satellite's Store and Forward (S&F) operation is not supported.

### DISCLOSURE

### TECHNICAL SOLUTION

Communication related to the satellite's S&F operation can be performed based on parameters provided by AF.

### BRIEF DESCRIPTION OF THE DRAWINGS

FIG. 1 shows an example of a communication system to which implementations of the present disclosure are applied.
FIG. 2 shows an example of wireless devices to which implementations of the present disclosure are applied.
FIG. 3 shows an example of UE to which implementations of the present disclosure are applied.
FIG. 4 shows an example of 5G system architecture to which implementations of the present disclosure are applied.
FIGS. 5 and 6 show an example of a registration procedure to which implementations of the present disclosure are applied.
FIG. 7 shows an example of NEF service operation according to an embodiment of the present disclosure.
FIG. 8 shows a first example of a situation where satellite communication is used according to an embodiment of the present disclosure.
FIG. 9 shows a second example of a situation where satellite communication is used according to an embodiment of the present disclosure.
FIG. 10 shows a first example of S&F related procedures according to an embodiment of the present disclosure.
FIG. 11 shows a second example of S&F related procedures according to an embodiment of the present disclosure.
FIG. 12 shows an example of operations related to S&F satellites according to an embodiment of the present disclosure.

### MODE FOR INVENTION

The following techniques, apparatuses, and systems may be applied to a variety of wireless multiple access systems. Examples of the multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multicarrier frequency division multiple access (MC-FDMA) system. CDMA may be embodied through radio technology such as universal terrestrial radio access (UTRA) or CDMA2000. TDMA may be embodied through radio technology such as global system for mobile communications (GSM), general packet radio service (GPRS), or enhanced data rates for GSM evolution (EDGE). OFDMA may be embodied through radio technology such as institute of electrical and electronics engineers (IEEE) 802.11 (Wi-Fi), IEEE 802.16 (WiMAX), IEEE 802.20, or evolved UTRA (E-UTRA). UTRA is a part of a universal mobile telecommunications system (UMTS). 3rd generation partnership project (3GPP) long term evolution (LTE) is a part of evolved UMTS (E-UMTS) using E-UTRA. 3GPP LTE employs OFDMA in DL and SC-FDMA in UL. Evolution of 3GPP LTE includes LTE-A (advanced), LTE-A Pro, and/or 5G new radio (NR).

For convenience of description, implementations of the present disclosure are mainly described in regards to a 3GPP based wireless communication system. However, the technical features of the present disclosure are not limited thereto. For example, although the following detailed description is given based on a mobile communication system corresponding to a 3GPP based wireless communication system, aspects of the present disclosure that are not limited to 3GPP based wireless communication system are applicable to other mobile communication systems.

For terms and technologies which are not specifically described among the terms of and technologies employed in the present disclosure, the wireless communication standard documents published before the present disclosure may be referenced.

In the present disclosure, "A or B" may mean "only A", "only B", or "both A and B". In other words, "A or B" in the present disclosure may be interpreted as "A and/or B". For example, "A, B or C" in the present disclosure may mean "only A", "only B", "only C", or "any combination of A, B and C".

In the present disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B" or "both A and B". In addition, the expression "at least one of A or B" or "at least one of A and/or B" in the present disclosure may be interpreted as same as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

Also, parentheses used in the present disclosure may mean "for example". In detail, when it is shown as "control information (PDCCH)", "PDCCH" may be proposed as an example of "control information". In other words, "control information" in the present disclosure is not limited to "PDCCH", and "PDCCH" may be proposed as an example of "control information". In addition, even when shown as "control information (i.e., PDCCH)", "PDCCH" may be proposed as an example of "control information".

Technical features that are separately described in one drawing in the present disclosure may be implemented separately or simultaneously.

Although not limited thereto, various descriptions, functions, procedures, suggestions, methods and/or operational flowcharts of the present disclosure disclosed herein can be applied to various fields requiring wireless communication and/or connection (e.g., 5G) between devices.

Hereinafter, the present disclosure will be described in more detail with reference to drawings. The same reference numerals in the following drawings and/or descriptions may refer to the same and/or corresponding hardware blocks, software blocks, and/or functional blocks unless otherwise indicated.

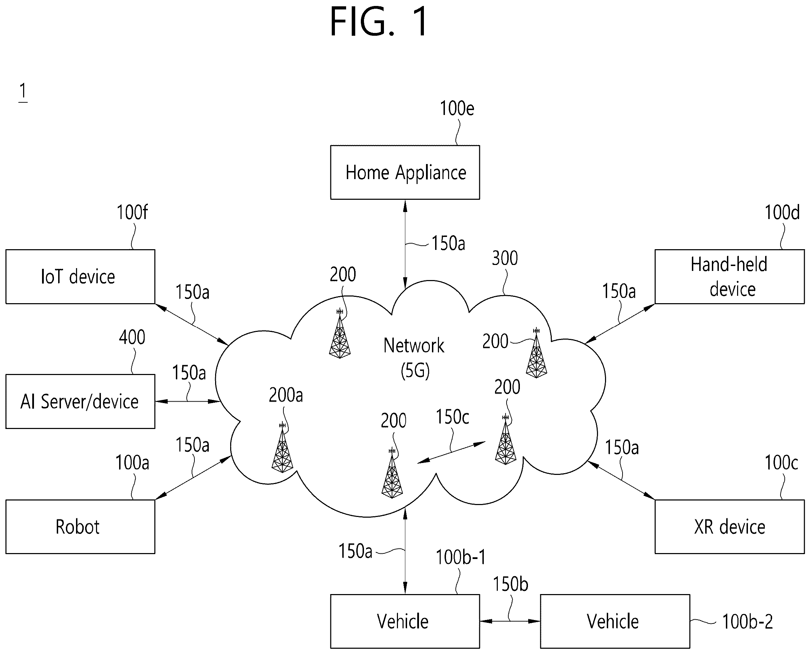

FIG. 1 shows an example of a communication system to which implementations of the present disclosure are applied.

The 5G usage scenarios shown in FIG. 1 are only exemplary, and the technical features of the present disclosure can be applied to other 5G usage scenarios which are not shown in FIG. 1.

Three main requirement categories for 5G include (1) a category of enhanced mobile broadband (eMBB), (2) a category of massive machine type communication (mMTC), and (3) a category of ultra-reliable and low latency communications (URLLC).

Referring to FIG. 1, the communication system 1 includes wireless devices 100a to 100f, base stations (BSs) 200, and a network 300. Although FIG. 1 illustrates a 5G network as an example of the network of the communication system 1, the implementations of the present disclosure are not limited to the 5G system, and can be applied to the future communication system beyond the 5G system.

The BSs 200 and the network 300 may be implemented as wireless devices and a specific wireless device may operate as a BS/network node with respect to other wireless devices.

The wireless devices 100a to 100f represent devices performing communication using radio access technology (RAT) (e.g., 5G new RAT (NR)) or LTE) and may be referred to as communication/radio/SG devices. The wireless devices 100a to 100f may include, without being limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of performing communication between vehicles. The vehicles may include an unmanned aerial vehicle (UAV) (e.g., a drone). The XR device may include an AR/VR/Mixed Reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter.

In the present disclosure, the wireless devices 100a to 100f may be called user equipments (UEs). A UE may include, for example, a cellular phone, a smartphone, a laptop computer, a digital broadcast terminal, a personal digital assistant (PDA), a portable multimedia player (PMP), a navigation system, a slate personal computer (PC), a tablet PC, an ultrabook, a vehicle, a vehicle having an autonomous traveling function, a connected car, an UAV, an AI module, a robot, an AR device, a VR device, an MR device, a hologram device, a public safety device, an MTC device, an IoT device, a medical device, a FinTech device (or a financial device), a security device, a weather/environment device, a device related to a 5G service, or a device related to a fourth industrial revolution field.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, a 5G (e.g., NR) network, and a beyond-5G network. Although the wireless devices 100a to 100f may communicate with each other through the BSs 200/network 300, the wireless devices 100a to 100f may perform direct communication (e.g., sidelink communication) with each other without passing through the BSs 200/network 300. For example, the vehicles 100b-1 and 100b-2 may perform direct communication (e.g., vehicle-to-vehicle (V2V)/vehicle-to-everything (V2X) communication). The IoT device (e.g., a sensor) may perform direct communication with other IoT devices (e.g., sensors) or other wireless devices 100a to 100f.

Wireless communication/connections 150a, 150b and 150c may be established between the wireless devices 100a to 100f and/or between wireless device 100a to 100f and BS 200 and/or between BSs 200. Herein, the wireless communication/connections may be established through various RATs (e.g., 5G NR) such as uplink/downlink communication 150a, sidelink communication (or device-to-device (D2D) communication) 150b, inter-base station communication 150c (e.g., relay, integrated access and backhaul (IAB)), etc. The wireless devices 100a to 100f and the BSs 200/the wireless devices 100a to 100f may transmit/receive radio signals to/from each other through the wireless communication/connections 150a, 150b and 150c. For example, the wireless communication/connections 150a, 150b and 150c may transmit/receive signals through various physical channels. To this end, at least a part of various configuration information configuring processes, various signal processing processes (e.g., channel encoding/decoding, modulation/demodulation, and resource mapping/de-mapping), and resource allocating processes, for transmitting/receiving radio signals, may be performed based on the various proposals of the present disclosure.

NR supports multiples numerologies (and/or multiple subcarrier spacings (SCS)) to support various 5G services. For example, if SCS is 15 kHz, wide area can be supported in traditional cellular bands, and if SCS is 30 kHz/60 kHz, dense-urban, lower latency, and wider carrier bandwidth can be supported. If SCS is 60 kHz or higher, bandwidths greater than 24.25 GHz can be supported to overcome phase noise.

The NR frequency band may be defined as two types of frequency range, i.e., FR1 and FR2. The numerical value of the frequency range may be changed. For example, the frequency ranges of the two types (FR1 and FR2) may be as shown in Table 1 below. For ease of explanation, in the frequency ranges used in the NR system, FR1 may mean "sub 6 GHz range", FR2 may mean "above 6 GHz range," and may be referred to as millimeter wave (mmW).

**[Table 1]**

| Frequency Range designation | Corresponding frequency range | Subcarrier Spacing |
|---|---|---|
| FR1 | 450MHz - 6000MHz | 15, 30, 60kHz |
| FR2 | 24250MHz - 52600MHz | 60, 120, 240kHz |

As mentioned above, the numerical value of the frequency range of the NR system may be changed. For example, FR1 may include a frequency band of 410MHz to 7125MHz as shown in Table 2 below. That is, FR1 may include a frequency band of 6GHz (or 5850, 5900, 5925 MHz, etc.) or more. For example, a frequency band of 6 GHz (or 5850, 5900, 5925 MHz, etc.) or more included in FR1 may include an unlicensed band. Unlicensed bands may be used for a variety of purposes, for example for communication for vehicles (e.g., autonomous driving).

**[Table 2]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Here, the radio communication technologies implemented in the wireless devices in the present disclosure may include narrowband internet-of-things (NB-IoT) technology for low-power communication as well as LTE, NR and 6G. For example, NB-IoT technology may be an example of low power wide area network (LPWAN) technology, may be implemented in specifications such as LTE Cat NB1 and/or LTE Cat NB2, and may not be limited to the above-mentioned names. Additionally and/or alternatively, the radio communication technologies implemented in the wireless devices in the present disclosure may communicate based on LTE-M technology. For example, LTE-M technology may be an example of LPWAN technology and be called by various names such as enhanced machine type communication (eMTC). For example, LTE-M technology may be implemented in at least one of the various specifications, such as 1) LTE Cat 0, 2) LTE Cat M1, 3) LTE Cat M2, 4) LTE non-bandwidth limited (non-BL), 5) LTE-MTC, 6) LTE Machine Type Communication, and/or 7) LTE M, and may not be limited to the above-mentioned names. Additionally and/or alternatively, the radio communication technologies implemented in the wireless devices in the present disclosure may include at least one of ZigBee, Bluetooth, and/or LPWAN which take into account low-power communication, and may not be limited to the above-mentioned names. For example, ZigBee technology may generate personal area networks (PANs) associated with small/low-power digital communication based on various specifications such as IEEE 802.15.4 and may be called various names.

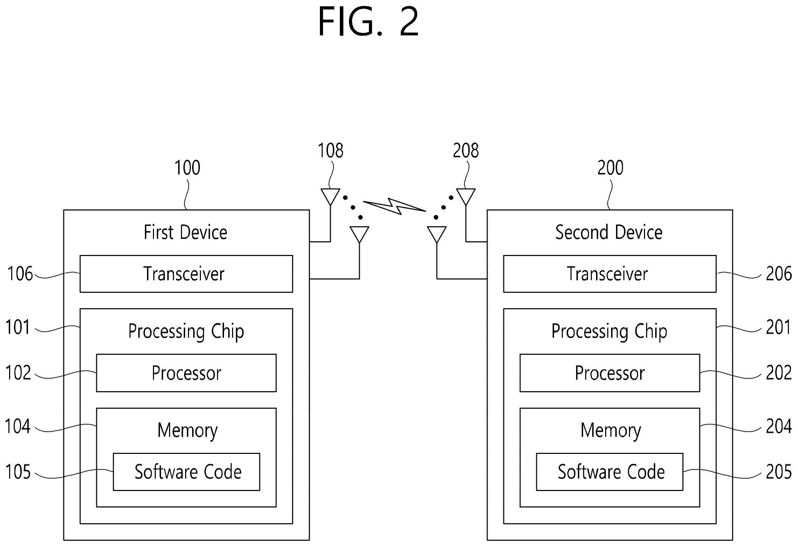

FIG. 2 shows an example of wireless devices to which implementations of the present disclosure are applied.

In FIG. 2, The first wireless device 100 and/or the second wireless device 200 may be implemented in various forms according to use cases/services. For example, {the first wireless device 100 and the second wireless device 200} may correspond to at least one of {the wireless device 100a to 100f and the BS 200}, {the wireless device 100a to 100f and the wireless device 100a to 100f} and/or {the BS 200 and the BS 200} of FIG. 1. The first wireless device 100 and/or the second wireless device 200 may be configured by various elements, devices/parts, and/or modules.

The first wireless device 100 may include at least one transceiver, such as a transceiver 106, at least one processing chip, such as a processing chip 101, and/or one or more antennas 108.

The processing chip 101 may include at least one processor, such a processor 102, and at least one memory, such as a memory 104. Additional and/or alternatively, the memory 104 may be placed outside of the processing chip 101.

The processor 102 may control the memory 104 and/or the transceiver 106 and may be adapted to implement the descriptions, functions, procedures, suggestions, methods and/or operational flowcharts described in the present disclosure. For example, the processor 102 may process information within the memory 104 to generate first information/signals and then transmit radio signals including the first information/signals through the transceiver 106. The processor 102 may receive radio signals including second information/signals through the transceiver 106 and then store information obtained by processing the second information/signals in the memory 104.

The memory 104 may be operably connectable to the processor 102. The memory 104 may store various types of information and/or instructions. The memory 104 may store a firmware and/or a software code 105 which implements codes, commands, and/or a set of commands that, when executed by the processor 102, perform the descriptions, functions, procedures, suggestions, methods and/or operational flowcharts disclosed in the present disclosure. For example, the firmware and/or the software code 105 may implement instructions that, when executed by the processor 102, perform the descriptions, functions, procedures, suggestions, methods and/or operational flowcharts disclosed in the present disclosure. For example, the firmware and/or the software code 105 may control the processor 102 to perform one or more protocols. For example, the firmware and/or the software code 105 may control the processor 102 to perform one or more layers of the radio interface protocol.

Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. Each of the transceiver 106 may include a transmitter and/or a receiver. The transceiver 106 may be interchangeably used with Radio Frequency (RF) unit(s). In the present disclosure, the first wireless device 100 may represent a communication modem/circuit/chip.

The second wireless device 200 may include at least one transceiver, such as a transceiver 206, at least one processing chip, such as a processing chip 201, and/or one or more antennas 208.

The processing chip 201 may include at least one processor, such a processor 202, and at least one memory, such as a memory 204. Additional and/or alternatively, the memory 204 may be placed outside of the processing chip 201.

The processor 202 may control the memory 204 and/or the transceiver 206 and may be adapted to implement the descriptions, functions, procedures, suggestions, methods and/or operational flowcharts described in the present disclosure. For example, the processor 202 may process information within the memory 204 to generate third information/signals and then transmit radio signals including the third information/signals through the transceiver 206. The processor 202 may receive radio signals including fourth information/signals through the transceiver 106 and then store information obtained by processing the fourth information/signals in the memory 204.

The memory 204 may be operably connectable to the processor 202. The memory 204 may store various types of information and/or instructions. The memory 204 may store a firmware and/or a software code 205 which implements codes, commands, and/or a set of commands that, when executed by the processor 202, perform the descriptions, functions, procedures, suggestions, methods and/or operational flowcharts disclosed in the present disclosure. For example, the firmware and/or the software code 205 may implement instructions that, when executed by the processor 202, perform the descriptions, functions, procedures, suggestions, methods and/or operational flowcharts disclosed in the present disclosure. For example, the firmware and/or the software code 205 may control the processor 202 to perform one or more protocols. For example, the firmware and/or the software code 205 may control the processor 202 to perform one or more layers of the radio interface protocol.

Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. Each of the transceiver 206 may include a transmitter and/or a receiver. The transceiver 206 may be interchangeably used with RF unit. In the present disclosure, the second wireless device 200 may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as Physical (PHY) layer, Media Access Control (MAC) layer, Radio Link Control (RLC) layer, Packet Data Convergence Protocol (PDCP) layer, Radio Resource Control (RRC) layer, and Service Data Adaptation Protocol (SDAP) layer). The one or more processors 102 and 202 may generate one or more Protocol Data Units (PDUs), one or more Service Data Unit (SDUs), messages, control information, data, or information according to the descriptions, functions, procedures, suggestions, methods and/or operational flowcharts disclosed in the present disclosure. The one or more processors 102 and 202 may generate signals (e.g., baseband signals) including PDUs, SDUs, messages, control information, data, or information according to the descriptions, functions, procedures, suggestions, methods and/or operational flowcharts disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, suggestions, methods and/or operational flowcharts disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. For example, the one or more processors 102 and 202 may be configured by a set of a communication control processor, an Application Processor (AP), an Electronic Control Unit (ECU), a Central Processing Unit (CPU), a Graphic Processing Unit (GPU), and a memory control processor. The one or more memories 104 and 204 may be connected to the one or more processors 102 and 202 and store various types of data, signals, messages, information, programs, code, instructions, and/or commands. The one or more memories 104 and 204 may be configured by Random Access Memory (RAM), Dynamic RAM (DRAM), Read-Only Memory (ROM), electrically Erasable Programmable Read-Only Memory (EPROM), flash memory, volatile memory, non-volatile memory, hard drive, register, cash memory, computer-readable storage medium, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the descriptions, functions, procedures, suggestions, methods and/or operational flowcharts disclosed in the present disclosure, to one or more other devices. The one or more transceivers 106 and 206 may receive user data, control information, and/or radio signals/channels, mentioned in the descriptions, functions, procedures, suggestions, methods and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices.

The one or more transceivers 106 and 206 may be connected to the one or more antennas 108 and 208. Additionally and/or alternatively, the one or more transceivers 106 and 206 may include one or more antennas 108 and 208. The one or more transceivers 106 and 206 may be adapted to transmit and receive user data, control information, and/or radio signals/channels, mentioned in the descriptions, functions, procedures, suggestions, methods and/or operational flowcharts disclosed in the present disclosure, through the one or more antennas 108 and 208. In the present disclosure, the one or more antennas 108 and 208 may be a plurality of physical antennas or a plurality of logical antennas (e.g., antenna ports).

The one or more transceivers 106 and 206 may convert received user data, control information, radio signals/channels, etc., from RF band signals into baseband signals in order to process received user data, control information, radio signals/channels, etc., using the one or more processors 102 and 202. The one or more transceivers 106 and 206 may convert the user data, control information, radio signals/channels, etc., processed using the one or more processors 102 and 202 from the base band signals into the RF band signals. To this end, the one or more transceivers 106 and 206 may include (analog) oscillators and/or filters. For example, the one or more transceivers 106 and 206 can up-convert OFDM baseband signals to OFDM signals by their (analog) oscillators and/or filters under the control of the one or more processors 102 and 202 and transmit the up-converted OFDM signals at the carrier frequency. The one or more transceivers 106 and 206 may receive OFDM signals at a carrier frequency and down-convert the OFDM signals into OFDM baseband signals by their (analog) oscillators and/or filters under the control of the one or more processors 102 and 202.

Although not shown in FIG. 2, the wireless devices 100 and 200 may further include additional components. The additional components 140 may be variously configured according to types of the wireless devices 100 and 200. For example, the additional components 140 may include at least one of a power unit/battery, an Input/Output (I/O) device (e.g., audio I/O port, video I/O port), a driving device, and a computing device. The additional components 140 may be coupled to the one or more processors 102 and 202 via various technologies, such as a wired or wireless connection.

In the implementations of the present disclosure, a UE may operate as a transmitting device in UL and as a receiving device in DL. In the implementations of the present disclosure, a BS may operate as a receiving device in UL and as a transmitting device in DL. Hereinafter, for convenience of description, it is mainly assumed that the first wireless device 100 acts as the UE, and the second wireless device 200 acts as the BS. For example, the processor(s) 102 connected to, mounted on or launched in the first wireless device 100 may be adapted to perform the UE behavior according to an implementation of the present disclosure or control the transceiver(s) 106 to perform the UE behavior according to an implementation of the present disclosure. The processor(s) 202 connected to, mounted on or launched in the second wireless device 200 may be adapted to perform the BS behavior according to an implementation of the present disclosure or control the transceiver(s) 206 to perform the BS behavior according to an implementation of the present disclosure.

In the present disclosure, a BS is also referred to as a node B (NB), an eNode B (eNB), or a gNB.

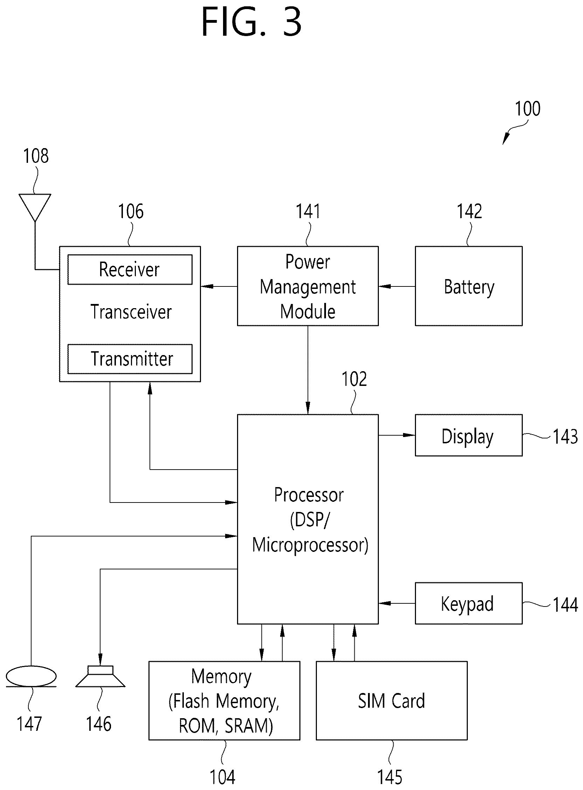

FIG. 3 shows an example of UE to which implementations of the present disclosure are applied.

Referring to FIG. 3, a UE 100 may correspond to the first wireless device 100 of FIG. 2.

A UE 100 includes a processor 102, a memory 104, a transceiver 106, one or more antennas 108, a power management module 141, a battery 142, a display 143, a keypad 144, a Subscriber Identification Module (SIM) card 145, a speaker 146, and a microphone 147.

The processor 102 may be adapted to implement the descriptions, functions, procedures, suggestions, methods and/or operational flowcharts disclosed in the present disclosure. The processor 102 may be adapted to control one or more other components of the UE 100 to implement the descriptions, functions, procedures, suggestions, methods and/or operational flowcharts disclosed in the present disclosure. Layers of the radio interface protocol may be implemented in the processor 102. The processor 102 may include ASIC, other chipset, logic circuit and/or data processing device. The processor 102 may be an application processor. The processor 102 may include at least one of DSP, CPU, GPU, a modem (modulator and demodulator). An example of the processor 102 may be found in SNAPDRAGON^{™} series of processors made by Qualcomm^{®}, EXYNOS^{™} series of processors made by Samsung^{®}, A series of processors made by Apple^{®}, HELIO^{™} series of processors made by MediaTek^{®}, ATOM^{™} series of processors made by Intel^{®} or a corresponding next generation processor.

The memory 104 is operatively coupled with the processor 102 and stores a variety of information to operate the processor 102. The memory 104 may include ROM, RAM, flash memory, memory card, storage medium and/or other storage device. When the embodiments are implemented in software, the techniques described herein can be implemented with modules (e.g., procedures, functions, etc.) that perform the descriptions, functions, procedures, suggestions, methods and/or operational flowcharts disclosed in the present disclosure. The modules can be stored in the memory 104 and executed by the processor 102. The memory 104 can be implemented within the processor 102 or external to the processor 102 in which case those can be communicatively coupled to the processor 102 via various means as is known in the art.

The transceiver 106 is operatively coupled with the processor 102, and transmits and/or receives a radio signal. The transceiver 106 includes a transmitter and a receiver. The transceiver 106 may include baseband circuitry to process radio frequency signals. The transceiver 106 controls the one or more antennas 108 to transmit and/or receive a radio signal.

The power management module 141 manages power for the processor 102 and/or the transceiver 106. The battery 142 supplies power to the power management module 141.

The display 143 outputs results processed by the processor 102. The keypad 144 receives inputs to be used by the processor 102. The keypad 144 may be shown on the display 143.

The SIM card 145 is an integrated circuit that is intended to securely store the International Mobile Subscriber Identity (IMSI) number and its related key, which are used to identify and authenticate subscribers on mobile telephony devices (such as mobile phones and computers). It is also possible to store contact information on many SIM cards.

The speaker 146 outputs sound-related results processed by the processor 102. The microphone 147 receives sound-related inputs to be used by the processor 102.

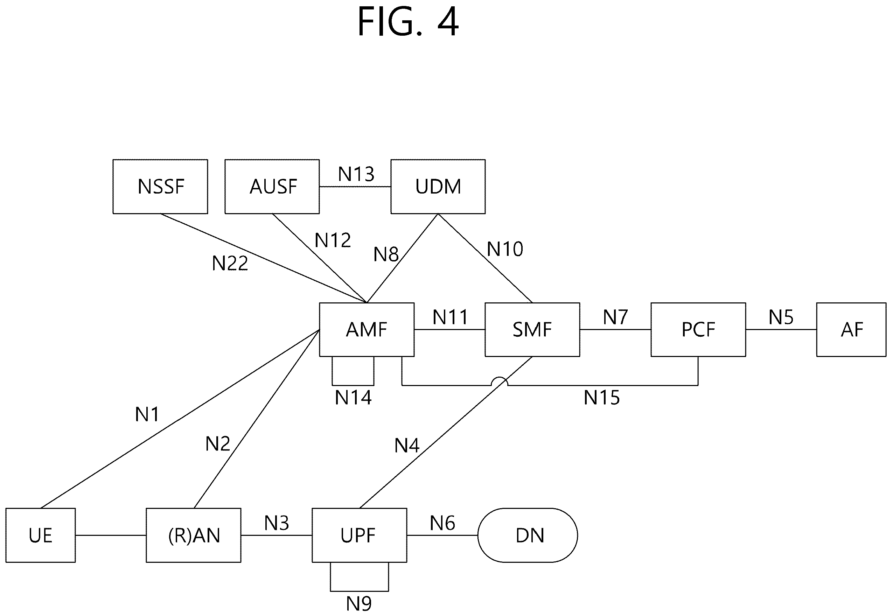

FIG. 4 shows an example of 5G system architecture to which implementations of the present disclosure are applied.

The 5G system (5GS) architecture consists of the following network functions (NF).
- Authentication Server Function (AUSF)
- Access and Mobility Management Function (AMF)
- Data Network (DN), e.g., operator services, Internet access or 3rd party services
- Unstructured Data Storage Function (UDSF)
- Network Exposure Function (NEF)
- Intermediate NEF (I-NEF)
- Network Repository Function (NRF)
- Network Slice Selection Function (NSSF)
- Policy Control Function (PCF)
- Session Management Function (SMF)
- Unified Data Management (UDM)
- Unified Data Repository (UDR)
- User Plane Function (UPF)
- UE radio Capability Management Function (UCMF)
- Application Function (AF)
- User Equipment (UE)
- (Radio) Access Network ((R)AN)
- 5G-Equipment Identity Register (SG-EIR)
- Network Data Analytics Function (NWDAF)
- CHarging Function (CHF)

Furthermore, the following network functions may be considered.
- Non-3GPP InterWorking Function (N3IWF)
- Trusted Non-3GPP Gateway Function (TNGF)
- Wireline Access Gateway Function (W-AGF)

FIG. 4 depicts the 5G system architecture in the non-roaming case, using the reference point representation showing how various network functions interact with each other.

In FIG. 4, for the sake of clarity of the point-to-point diagrams, the UDSF, NEF and NRF have not been depicted. However, all depicted Network Functions can interact with the UDSF, UDR, NEF and NRF as necessary.

For clarity, the UDR and its connections with other NFs, e.g., PCF, are not depicted in FIG. 4. For clarity, the NWDAF and its connections with other NFs, e.g., PCF, are not depicted in FIG. 4.

The 5G system architecture contains the following reference points:
- N1: Reference point between the UE and the AMF.
- N2: Reference point between the (R)AN and the AMF.
- N3: Reference point between the (R)AN and the UPF.
- N4: Reference point between the SMF and the UPF.
- N6: Reference point between the UPF and a Data Network.
- N9: Reference point between two UPFs.

The following reference points show the interactions that exist between the NF services in the NFs.
- N5: Reference point between the PCF and an AF.
- N7: Reference point between the SMF and the PCF.
- N8: Reference point between the UDM and the AMF.
- N10: Reference point between the UDM and the SMF.
- N11: Reference point between the AMF and the SMF.
- N12: Reference point between the AMF and the AUSF.
- N13: Reference point between the UDM and the AUSF.
- N14: Reference point between two AMFs.
- N15: Reference point between the PCF and the AMF in the case of non-roaming scenario, PCF in the visited network and AMF in the case of roaming scenario.
- N16: Reference point between two SMFs, (in roaming case between SMF in the visited network and the SMF in the home network).
- N22: Reference point between the AMF and the NSSF.

In some cases, a couple of NFs may need to be associated with each other to serve a UE.

A registration procedure is described. Reference may be made to section 4.2.2.2 of 3GPP TS 23.502 V16.3.0 (2019-12).

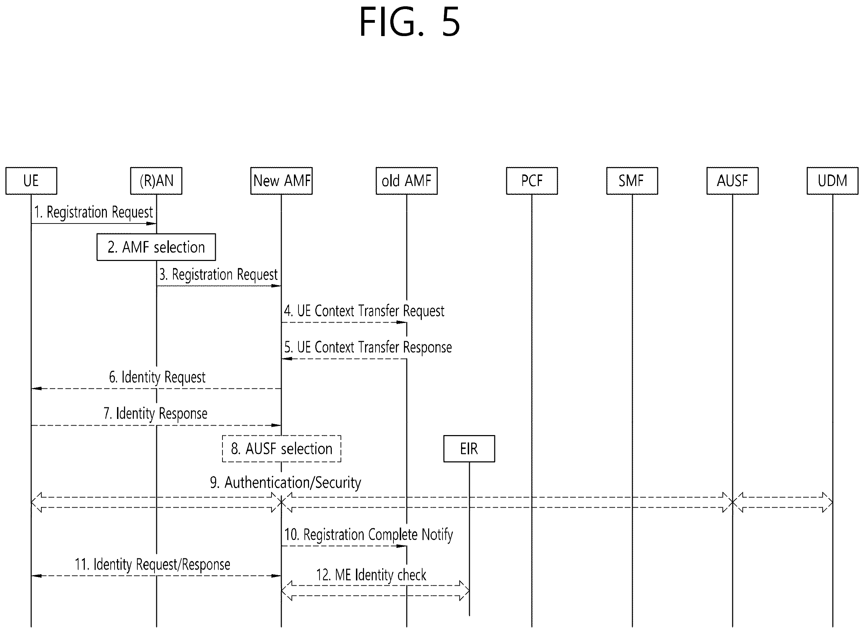

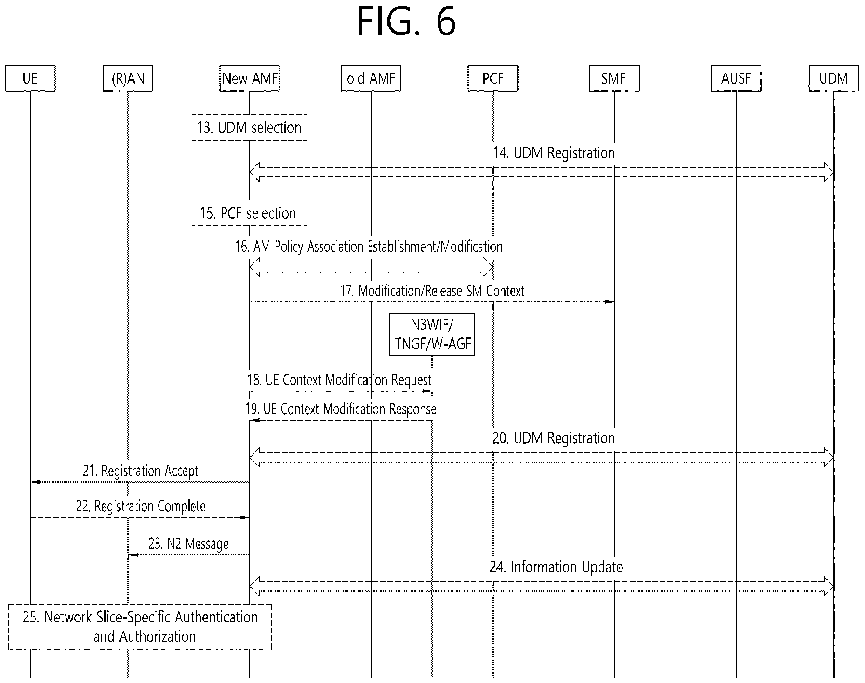

FIGS. 5 and 6 show an example of a registration procedure to which implementations of the present disclosure are applied.

A UE needs to register with the network to get authorized to receive services, to enable mobility tracking and to enable reachability. The UE initiates the registration procedure using one of the following registration types:
- Initial registration to the 5GS; or
- Mobility registration update; or
- Periodic registration update; or
- Emergency registration.

The general registration procedure in FIGS. 5 and 6 applies on all these registration procedures, but the periodic registration update need not include all parameters that are used in other registration cases.

The general registration procedure in FIGS. 5 and 6 is also used for the case of registration in 3GPP access when the UE is already registered in a non-3GPP access, and vice versa. Registration in 3GPP access when the UE is already registered in a non-3GPP access scenario may require an AMF change.

First, procedures of FIG. 5 are described.
(1) Step 1: The UE transmits a Registration Request message to the (R)AN. The Registration Request message corresponds to AN message.

The Registration Request message may include AN parameters. In the case of NG-RAN, the AN parameters include, e.g., 5G SAE temporary mobile subscriber identity (5G-S-TMSI) or globally unique AMF ID (GUAMI), the selected public land mobile network (PLMN) ID (or PLMN ID and network identifier (NID)) and Requested network slice selection assistance information (NSSAI). The AN parameters also include establishment cause. The establishment cause provides the reason for requesting the establishment of an RRC connection. Whether and how the UE includes the Requested NSSAI as part of the AN parameters is dependent on the value of the access stratum connection establishment NSSAI inclusion mode parameter.

The Registration Request message may include a registration type. The registration type indicates if the UE wants to perform an initial registration (i.e., the UE is in RM-DEREGISTERED state), a mobility registration update (i.e., the UE is in RM-REGISTERED state and initiates a registration procedure due to mobility or due to the UE needs to update its capabilities or protocol parameters, or to request a change of the set of network slices it is allowed to use), a periodic registration update (i.e., the UE is in RM-REGISTERED state and initiates a registration procedure due to the periodic registration update timer expiry) or an emergency registration (i.e., the UE is in limited service state).

When the UE is performing an initial registration, the UE shall indicate its UE identity in the Registration Request message as follows, listed in decreasing order of preference:
i) a 5G globally unique temporary identifier (5G-GUTI) mapped from an evolved packet system (EPS) GUTI, if the UE has a valid EPS GUTI.
ii) a native 5G-GUTI assigned by the PLMN to which the UE is attempting to register, if available;
iii) a native 5G-GUTI assigned by an equivalent PLMN to the PLMN to which the UE is attempting to register, if available;
iv) a native 5G-GUTI assigned by any other PLMN, if available.
v) Otherwise, the UE shall include its subscriber concealed identifier (SUCI) in the Registration Request message.

When the UE performing an initial registration has both a valid EPS GUTI and a native 5G-GUTI, the UE shall also indicate the native 5G-GUTI as additional GUTI. If more than one native 5G-GUTIs are available, the UE shall select the 5G-GUTI in decreasing order of preference among items (ii)-(iv) in the list above.

When the UE is performing an initial registration with a native 5G-GUTI, then the UE shall indicate the related GUAMI information in the AN parameters. When the UE is performing an initial registration with its SUCI, the UE shall not indicate any GUAMI information in the AN parameters.

For an emergency registration, the SUCI shall be included if the UE does not have a valid 5G-GUTI available; the permanent equipment identifier (PEI) shall be included when the UE has no subscriber permanent identifier (SUPI) and no valid 5G-GUTI. In other cases, the 5G-GUTI is included and it indicates the last serving AMF.

The Registration Request message may also include security parameters, PDU Session Status, etc. The security parameters are used for authentication and integrity protection. The PDU Session Status indicates the previously established PDU sessions in the UE. When the UE is connected to the two AMFs belonging to different PLMN via 3GPP access and non-3GPP access then the PDU Session status indicates the established PDU Session of the current PLMN in the UE.

### (2) Step 2: The (R)AN selects an AMF.

If a 5G-S-TMSI or GUAMI is not included or the 5G-S-TMSI or GUAMI does not indicate a valid AMF, the (R)AN, based on (R)AT and requested NSSAI, if available, selects an AMF.

If UE is in CM-CONNECTED state, the (R)AN can forward the Registration Request message to the AMF based on the N2 connection of the UE.

If the (R)AN cannot select an appropriate AMF, it forwards the Registration Request message to an AMF which has been configured, in the (R)AN, to perform AMF selection.

(3) Step 3: The (R)AN transmits a Registration Request message to the new AMF. The Registration Request message corresponds to N2 message.

The Registration Request message may include whole information and/or a part of information included in the Registration Request message received from the UE which is described in step 1.

The Registration Request message may include N2 parameters. When NG-RAN is used, the N2 parameters include the selected PLMN ID (or PLMN ID and NID), location information and cell identity related to the cell in which the UE is camping, UE context request which indicates that a UE context including security information needs to be setup at the NG-RAN. When NG-RAN is used, the N2 parameters shall also include the establishment cause.

If the Registration type indicated by the UE is Periodic Registration Update, then steps 4 to 19 may be omitted.

(4) Step 4: If the UE's 5G-GUTI was included in the Registration Request message and the serving AMF has changed since last registration procedure, the new AMF may invoke the Namf_Communication_UEContextTransfer service operation on the old AMF including the complete registration request non-access stratum (NAS) message to request the UE's SUPI and UE context.

(5) Step 5: The Old AMF may respond to the new AMF for the Namf_Communication_UEContextTransfer invocation by including the UE's SUPI and UE context.

(6) Step 6: If the SUCI is not provided by the UE nor retrieved from the old AMF, the identity request procedure may be initiated by the new AMF sending the Identity Request message to the UE requesting the SUCI.

(7) Step 7: The UE may respond with an Identity Response message including the SUCI. The UE derives the SUCI by using the provisioned public key of the home PLMN (HPLMN).

(8) Step 8: The new AMF may decide to initiate UE authentication by invoking an AUSF. In that case, the new AMF selects an AUSF based on SUPI or SUCI.

(9) Step 9: Authentication/security may be established by the UE, new AMF, AUSF and/or UDM.

(10) Step 10: If the AMF has changed, the new AMF may notify the old AMF that the registration of the UE in the new AMF is completed by invoking the Namf_Communication _RegistrationCompleteNotify service operation. If the authentication/security procedure fails, then the registration shall be rejected, and the new AMF may invoke the Namf_Communication_RegistrationCompleteNotify service operation with a reject indication reason code towards the old AMF. The old AMF may continue as if the UE context transfer service operation was never received.

(11) Step 11: If the PEI was not provided by the UE nor retrieved from the old AMF, the Identity Request procedure may be initiated by the new AMF sending an Identity Request message to the UE to retrieve the PEI. The PEI shall be transferred encrypted unless the UE performs emergency registration and cannot be authenticated.

(12) Step 12: Optionally, the new AMF may initiate ME identity check by invoking the N5g-eir_EquipmentIdentityCheck_Get service operation.

Now, procedures of FIG. 6, which follow the procedures of FIG. 5, are described.

(13) Step 13: If step 14 below is to be performed, the new AMF, based on the SUPI, may select a UDM, then UDM may select a UDR instance.

(14) Step 14: The new AMF may register with the UDM.

(15) Step 15: The new AMF may select a PCF.

(16) Step 16: The new AMF may optionally perform an AM Policy Association Establishment/Modification.

(17) Step 17: The new AMF may transmit Update/Release SM Context message (e.g., Nsmf_PDUSession_UpdateSMContext and/or Nsmf_PDUSession_ReleaseSMContext) to the SMF.

(18) Step 18: If the new AMF and the old AMF are in the same PLMN, the new AMF may send a UE Context Modification Request to the N3IWF/TNGF/W-AGF.

(19) Step 19: The N3IWF/TNGF/W-AGF may send a UE Context Modification Response to the new AMF.

(20) Step 20: After the new AMF receives the response message from the N3IWF/TNGF/W-AGF in step 19, the new AMF may register with the UDM.

(21) Step 21: The new AMF transmits a Registration Accept message to the UE.

The new AMF sends a Registration Accept message to the UE indicating that the Registration Request has been accepted. 5G-GUTI is included if the new AMF allocates a new 5G-GUTI. If the UE is already in RM-REGISTERED state via another access in the same PLMN, the UE shall use the 5G-GUTI received in the Registration Accept message for both registrations. If no 5G-GUTI is included in the Registration Accept message, then the UE uses the 5G-GUTI assigned for the existing registration also for the new registration. If the new AMF allocates a new registration area, it shall send the registration area to the UE via Registration Accept message. If there is no registration area included in the Registration Accept message, the UE shall consider the old registration area as valid. Mobility Restrictions is included in case mobility restrictions applies for the UE and registration type is not emergency registration. The new AMF indicates the established PDU sessions to the UE in the PDU Session status. The UE removes locally any internal resources related to PDU sessions that are not marked as established in the received PDU Session status. When the UE is connected to the two AMFs belonging to different PLMN via 3GPP access and non-3GPP access then the UE removes locally any internal resources related to the PDU session of the current PLMN that are not marked as established in received PDU Session status. If the PDU Session status information was in the Registration Request message, the new AMF shall indicate the PDU Session status to the UE.

The Allowed NSSAI provided in the Registration Accept message is valid in the registration area and it applies for all the PLMNs which have their tracking areas included in the registration area. The Mapping Of Allowed NSSAI is the mapping of each S-NSSAI of the Allowed NSSAI to the HPLMN S-NSSAIs. The Mapping Of Configured NSSAI is the mapping of each S-NSSAI of the Configured NSSAI for the serving PLMN to the HPLMN S-NSSAIs.

Furthermore, optionally the new AMF performs a UE Policy Association Establishment.

(22) Step 22: The UE may send a Registration Complete message to the new AMF when it has successfully updated itself.

The UE may send a Registration Complete message to the new AMF to acknowledge if a new 5G-GUTI was assigned.

(23) Step 23: For registration over 3GPP Access, if the new AMF does not release the signaling connection, the new AMF may send the RRC Inactive Assistance Information to the NG-RAN. For registration over non-3GPP Access, if the UE is also in CM-CONNECTED state on 3GPP access, the new AMF may send the RRC Inactive Assistance Information to the NG-RAN.

(24) Step 24: The new AMF may perform information update towards the UDM.

(25) Step 25: The UE may execute Network Slice-Specific Authentication and Authorization (NSSAA) procedure.

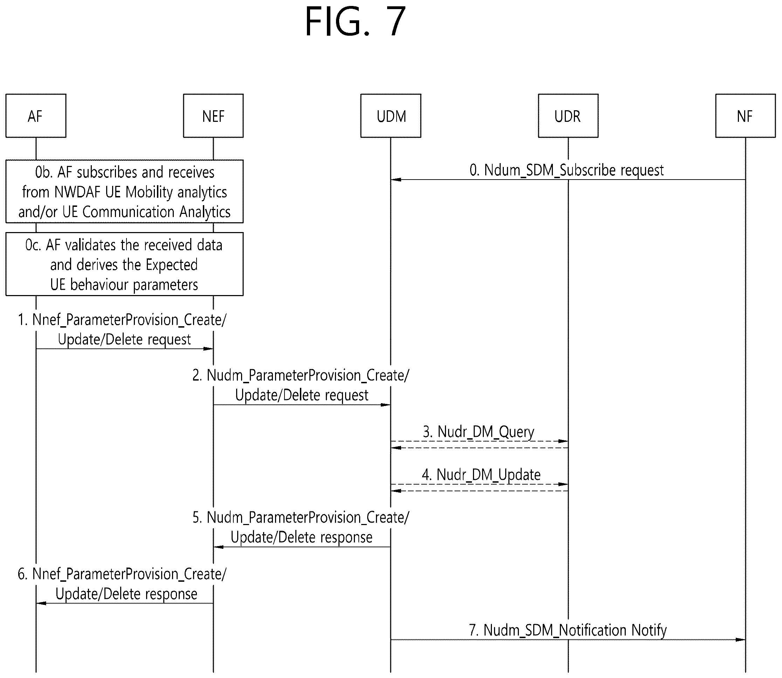

Hereinafter, an example of External Parameter Provisioning is described with reference to the example of FIG. 7.

The following drawings are created to explain specific embodiments of the present disclosure. The names of the specific devices or the names of the specific signals/messages/fields shown in the drawings are provided by way of example, and thus the technical features of the present disclosure are not limited to the specific names used in the following drawings.

FIG. 7 shows an example of NEF service operation according to an embodiment of the present disclosure.

Provisioning function allows an external party to provision the information, such as expected UE behavior and service specific parameters or the 5G Virtual Network (VN) group information to 5G network functions. In the case of provisioning the expected UE behavioral information, the expected UE behavioral information consists of information on expected UE movement and communication characteristics. In the case of provisioning the 5G VN group information, the provisioning information consists of information on 5G VN group. The service specific information consists of information to support the specific service in 5G system. Provisioned data can be used by the other NFs.

The example of FIG. 7 shows an example of NEF service operation information flow. For example, the example of FIG. 7 includes various NEF service operation operations (e.g., Nnef_ParameterProvision_Create / Nnef_ParameterProvision_Update / Nnef_ParameterProvision_Delete request/response operations).

For the example of FIG. 7, reference may be made to 3GPP TS 23.502 V18.1.1 S4.15.6.2.

0. NF may subscribe to UDM notifications of UE and/or Group Subscription data updates. In the UDM subscription, the NF may request to be notified about expected UE behavior parameter(s) that may have been externally provisioned by an AF.

If an expected UE behavior parameter subscription is provided by the NF, the subscription may include a threshold indicating that certain confidence and/or accuracy levels must be met for the parameter(s) to be notified by UDM to the NF. Meeting the threshold condition may mean that a parameter is equal to a certain threshold, or less than a certain threshold, or greater than a certain threshold, or less than or equal to a certain threshold, or greater than or equal to a certain threshold. The threshold may be in the form of a range (e.g., minimum value to maximum value, where each may be inclusive or exclusive) or a specific value.

0b. [Conditional operation, on using NWDAF-assisted values] The AF may subscribe to NWDAF via NEF in order to learn the UE mobility analytics and/or UE communication analytics for a UE or group of UEs by applying the procedure specified in clause 6.1.1.2 of TS 23.288.

0c. [Conditional operation, on using NWDAF-assisted values] AF may validate the received data and derive any of the Expected UE behavior parameters for a UE or group of UEs.
1. The AF provides one or more parameter(s) to be created or updated, or deleted in a Nnef_ParameterProvision_Create message or Nnef_ParameterProvision_Update message or Nnef_ParameterProvision_Delete Request message to the NEF. The parameters(s) may include corresponding confidence and/or accuracy levels.

The GPSI identifies the UE and the Transaction Reference ID identifies the transaction request between NEF and AF. For the case of Nnef_ParameterProvision_Create, the NEF assigns a Transaction Reference ID to the Nnef_ParameterProvision_Create request.

NEF checks whether the requestor is allowed to perform the requested service operation by checking requestor's identifier (i.e., AF Identifier).

For a Create request associated with a 5G VN group, the External Group ID identifies the 5G VN Group.

The payload of the Nnef_ParameterProvision_Update Request may include one or more of the following parameters:
- Expected UE Behavior parameters; or
- Network Configuration parameters; or
- External Group Id and 5G VN group data; or
- 5G VN group membership management parameters; or
- Location Privacy Indication parameters of the "LCS privacy" Data Subset of the Subscription Data; or
- MTC Provider Information; or
- AF provided ECS Address Configuration Information; or
- DNN and S-NSSAI specific Group Parameters.

The AF may request to delete 5G VN configuration by sending Nnef_ParameterProvision_Delete to the NEF.

2. If the AF is authorized by the NEF to provision the parameters, the NEF may transmit subscriber data via Nudm_ParameterProvision_Create, Nudm_ParameterProvision_Update, or Nudm_ParameterProvision_Delete Request message. Based on these messages, the NEF may request to create, update and store, or delete the provisioned parameters as part of the subscriber data. The message may include the provisioned data and NEF reference ID and optionally MTC Provider Information.

If the AF is not authorized to provision the parameters, then the NEF may perform step 6. For example, the NEF may include failure reason in Nnef_ParameterProvision_Create/Update/Delete Response message. Step 7 does not apply in this case.

If the NEF did not receive DNN and/or S-NSSAI from the AF and such information is configured as needed within 5GC, the NEF may determine the DNN and/or S-NSSAI from the AF Identifier.

If the AF provides the DNN and S-NSSAI specific Group Parameters, the AF shall indicate the External Group ID, targeted DNN and S-NSSAI in the request.

If the AF provides the service area in the form of geographical information, the NEF maps the geographical information to the list of TAs.

3. UDM may read from UDR, by means of Nudr_DM_Query, corresponding subscription information in order to validate required data updates and authorize these changes for this subscriber or Group for the corresponding AF.

Based on local configuration, UDM may determine if there is any requirement in terms of threshold conditions that need to be met by the provisioned parameter before storing the parameter in UDR. If satisfied, UDM may proceed seamlessly. If not satisfied, step 5 is triggered as a failed procedure and a related cause value is provided, e.g., "confidence level not sufficient". In that case step 4 may be skipped.

4. If the AF is authorized by the UDM to provision the parameters for this subscriber, the UDM resolves the GPSI to SUPI and requests to create, update or delete the provisioned parameters as part of the subscriber data via Nudr_ DM _Create/Update/Delete Request message. The message that the UDM provides to the UDR may include the provisioned data.

If a new 5G VN group is created, the UDM may assign a unique Internal Group ID for the 5G VN group and include the newly assigned Internal Group ID in the Nudr_ DM _Create Request message. If the list of 5G VN group members is changed or if 5G VN group data has changed, the UDM may update the UE and/or Group subscription data according to the AF/NEF request.

5. UDM responds the request of the NEF by sending Nudm_ParameterProvision_Create/Update/Delete Response message. If the procedure failed, the cause value indicates the reason.

6. NEF responds the request of the AF with Nnef_ParameterProvision_Create/Update/Delete Response. If the procedure failed, the cause value indicates the reason.

7. [Conditional operation, this step occurs only after successful step 4] UDM may notify the subscribed Network Function (e.g., AMF) of the updated UE and/or Group subscription data via Nudm_SDM_Notification Notify message.

a) If the NF is AMF, the UDM performs Nudm_SDM_Notification (SUPI or Internal Group Identifier, AMF-Associated Expected UE Behavior parameters, Subscribed Periodic Registration Timer, subscribed Active Time, 5G VN group data or DNN and S-NSSAI specific Group Parameters, etc.) service operation. If the AMF receives confidence and/or accuracy levels along the Expected UE behavior parameter(s), the AMF may use the associated confidence level and/or accuracy level when handling the expected UE behavior parameter(s). The AMF uses the received parameters to derive the appropriate UE configuration of the NAS parameters and to derive Core Network assisted RAN parameters. The AMF may determine a Registration area based on parameters Stationary indication or Expected UE Moving Trajectory.

b) If the NF is SMF, the UDM performs Nudm_SDM_Notification (SUPI or Internal Group Identifier, SMF-Associated Expected UE Behavior parameter set, DNN/S-NSSAI, Suggested Number of Downlink Packets, 5G VN group data or DNN and S-NSSAI specific Group Parameters, etc.) service operation.

The SMF stores the received parameters and associates them with a PDU Session based on the DNN and S-NSSAI included in the message from UDM.

If the SMF obtains service area for a group, the SMF configures the DNN for the group as LADN DNN.

Satellite communication has been introduced. However, there is a problem that the satellite's Store and Forward (S&F) operation is not supported. For example, the store and forward function of satellite access needs to be supported.

For example, in conventional 3GPP standard technology, satellites operated in Transparent mode. Technology related to Regenerative mode that can perform functions such as Store and Forward has not been defined. In the future, 5G evolution/6G systems in zero-touch configuration/operation environments with expanded network automation are scheduled to be introduced. For this purpose, it is necessary to define functions required for satellite access to operate with store and forward functionality.

For reference, in conventional technology, there exist technologies that use satellites as one of the 3GPP access networks in 5G systems and technologies that utilize them as one of the backhauls. For reference, related contents are described in TS 23.501 V17.2.0 and TS 23.502 V17.2.0. However, related technology for operating in Store and Forward mode has not been defined, and there is no discussion about specific required technologies.

For reference, regarding the Store and Forward (S&F) operation described in various examples of the present disclosure, reference may be made to use cases in 3GPP TR 22.865 V1.0.0.

The present disclosure describes examples related to the Store and Forward function of satellite access, targeting 5G evolution/6G systems. For example, it may describe network provisioning parameters necessary for satellite access to operate based on store and forward functionality and procedures for provisioning those parameters to networks and terminals. For example, parameter provisioning based on dynamic requests from AF of 3rd party business partners may be performed, not only network operator configuration. According to examples of the present disclosure, based on parameter provisioning, networks may provide services utilizing satellites more dynamically.

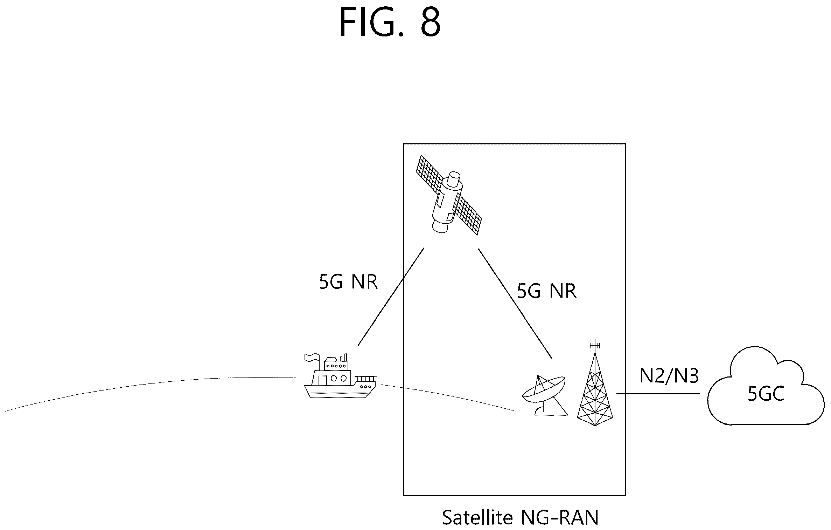

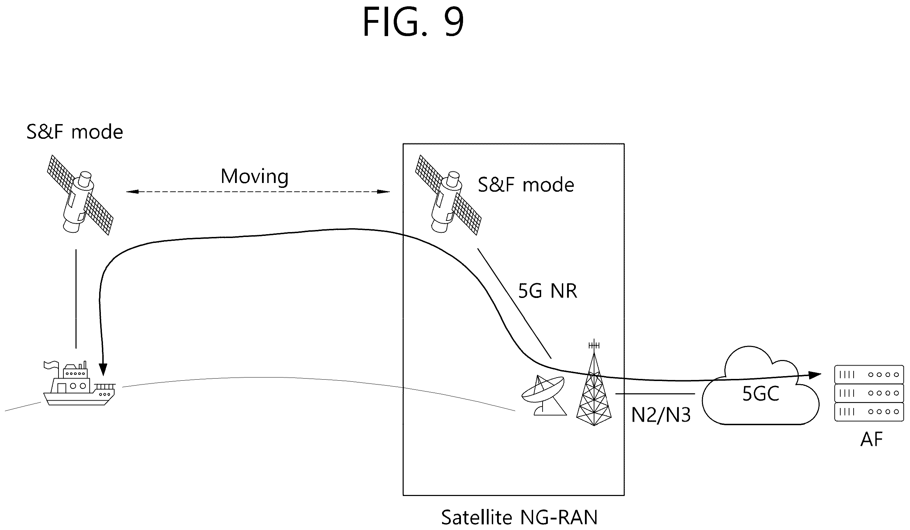

Examples of satellite access operating in store and forward mode are described with reference to examples of FIG. 8 and FIG. 9.

In the examples of FIG. 8 and FIG. 9, satellite access operating in store and forward mode is assumed. FIGS. 8 and 9 include examples of network structure and interfaces, and the scope of the present disclosure is not limited to the structures and interfaces of FIGS. 8 and 9.

For reference, in the examples of FIG. 8 and FIG. 9, satellite NG-RAN may include terrestrial base stations capable of communicating with satellites/or base stations mounted on satellites, terrestrial Ground Gateways, and satellites. Terrestrial base stations may be connected to 5GC based on N2 and/or reference points. For example, satellites included in satellite NG-RAN may perform 5G NR communication with terrestrial base stations. UEs may perform communication with terrestrial base stations via satellites. Base stations mounted on satellites may also be connected to 5GC based on N2 and/or reference points via terrestrial Ground Gateways.

The following drawings are created to explain specific embodiments of the present disclosure. The names of the specific devices or the names of the specific signals/messages/fields shown in the drawings are provided by way of example, and thus the technical features of the present disclosure are not limited to the specific names used in the following drawings.

FIG. 8 shows a first example of a situation where satellite communication is used according to an embodiment of the present disclosure.

In the example of FIG. 8, a ship or equipment inside the ship may correspond to UE. According to the example of FIG. 8, when a ship or UE within the ship is docked at land (e.g., a place such as a port) or when the ship is located close to land, it shows a case where the ship can access ground network/core network through satellite access.

The present disclosure describes a solution for utilizing satellites with store and forward functionality. For example, technology may be described in the present disclosure where various essential information can be delivered to network nodes and terminals according to provision procedures in advance or when satellites are connected to the network. At this time, conventional external parameter provisioning procedures may be utilized. According to various examples of the present disclosure, the various examples of the present disclosure describe operations where AF delivers information necessary for store and forward functionality to appropriate network nodes and terminals. However, the scope of the present disclosure is not limited by external parameter provisioning procedures.

The situation after successful parameter provision is performed is described with reference to the example of FIG. 9.

The following drawings are created to explain specific embodiments of the present disclosure. The names of the specific devices or the names of the specific signals/messages/fields shown in the drawings are provided by way of example, and thus the technical features of the present disclosure are not limited to the specific names used in the following drawings.

FIG. 9 shows a second example of a situation where satellite communication is used according to an embodiment of the present disclosure.

Successful parameter provision may be performed. Thereafter, as in the example of FIG. 9, the ship can move to open sea far from land. This may be a situation where the ship or UE within the ship cannot connect to the ground network. In this case, a satellite operating in store and forward mode may receive data from the ship and then move, or receive some data from a server (e.g., AF) and then move. A satellite operating in store and forward mode may provide services to UEs that cannot connect to the ground network by delivering such data to UEs or servers. For example, the service provided in the example of FIG. 9 may be a service that allows a certain level of delay. For example, such services may be delay tolerant services such as services related to regular status monitoring information of various IoT devices on ships, services related to information about policies and instructions from networks or servers, etc.

The following drawings are created to explain specific embodiments of the present disclosure. The names of the specific devices or the names of the specific signals/messages/fields shown in the drawings are provided by way of example, and thus the technical features of the present disclosure are not limited to the specific names used in the following drawings.

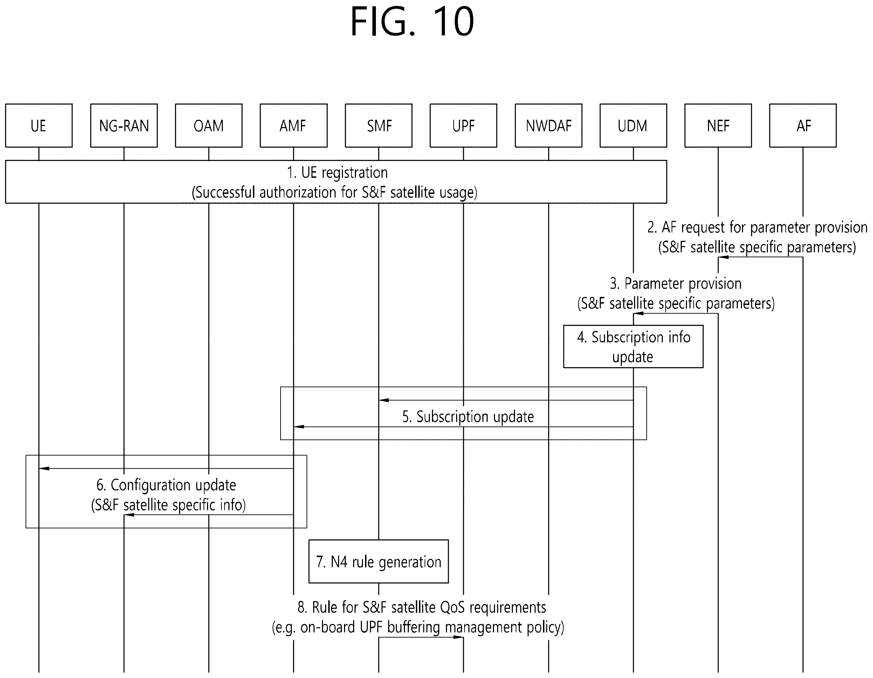

FIG. 10 shows a first example of S&F related procedures according to an embodiment of the present disclosure.
1. The UE may perform a registration procedure to 5GS. For example, the registration procedures described in the examples of FIGS. 5 and 6 may be performed.
   During the registration procedure, a UE authorization procedure may be performed. For example, subscriber information of the UE may be verified by the network. And, authorization (e.g., UE authorization procedure) that the UE can use Store and Forward (S&F) satellite may be performed.
2. The AF may transmit a request for external parameter provision to the NEF. For example, the AF may transmit an AF request message for parameter provision to the NEF. The request message that the AF transmits to the NEF may include S&F satellite specific parameters. Based on business prior agreements or operator policies, etc., whether AF's request is accepted in 5GC may be determined.

Table 3 below is an example of parameters related to S&F satellites (e.g., S&F satellite specific parameter). However, the scope of the present disclosure is not limited by the parameters in the examples below. For example, the names of parameters related to S&F satellites are not limited by the parameter names described in the example of Table 3.

An example of S&F satellite specific parameter is described.

**[Table 3]**

| Parameters | Description |
|---|---|
| S&F data retention period | Identifies the maximum time period to be able to keep the data per UE and/or per satellite |
| | [optional] |
| S&F data storage quota | Identifies the maximum data storage quota per UE and/or per satellite |
| | [optional] |
| Satellite backhaul category(ies) | Identifies Satellite backhaul category(ies) supporting S&F operation |
| | [optional] |
| Satellite ID(s) | Identifies Satellite ID(s) supporting S&F operation |
| | [optional] |
| On-board satellite backhaul category(ies) | Identifies Satellite backhaul category(ies) supporting on-board UPF |
| | [optional] |
| On-board satellite ID(s) | Identifies Satellite ID(s) supporting on-board UPF |
| | [optional] |

Table 3 shows examples of parameters related to Store and Forward satellites and descriptions related to the parameters.

The AF may invoke service operations related to parameter provision (e.g., see clause 4.15.6.2 of TS 23.502) (e.g., Nnef_ParameterProvision Service). The AF may include S&F satellite specific parameters as shown in the example of Table 3 in request messages related to parameter provision. For example, the AF may transmit a request message including parameters related to S&F satellite to the NEF.

3. The NEF may transmit a message related to parameter provision to the UDM. For example, the NEF may transmit information included in the AF request to the UDM by using Nudm _ParameterProvision service operation.

4. The UDM may update subscription information. For example, the UDM may add/update the information received in step 3 to subscription information.

5. The UDM may deliver subscription information to the AMF and/or SMF. For example, the subscription information delivered by the UDM may include S&F satellite specific parameters. Through conventional subscription information update procedures, the UDM delivers updated subscription information to the AMF and/or SMF. Through this process, Store and Forward satellite specific Parameters received from the AF may be delivered to control network nodes of 5GC (e.g., AMF, SMF, etc.). Each control network node may perform procedures to apply/enforce Store and Forward satellite specific policies based on subscription information including parameters.

6. Some or all of the Store and Forward satellite specific Parameters information may be delivered transparently or processed to the NG-RAN including satellite access (base stations connected to satellites or base stations mounted on satellites) or to terminals. Based on Store and Forward satellite specific Parameters, Store and Forward satellite specific policies may be applied. While the examples of the present disclosure do not specify specific messages used to transmit these parameters, conventional AS/NAS/N2 messages may be utilized for parameter transmission, or newly defined message procedures may be used for parameter transmission.

Specific examples of operations related to step 6 may include the following a to d:
a. A terminal (e.g., UE) may receive S&F data storage quota per UE information. Then, when the terminal transmits uplink data of a PDU session for an application performing S&F operation, the terminal may control so that uplink data does not exceed the max value received from the network. For example, even if the terminal can send uplink data, the terminal may have previously sent above a certain level. In this case, the terminal may perform rate control such as buffering or dropping data from the application layer.
b. A terminal may receive S&F data retention period per UE information. In this case, when the terminal transmits uplink data for a PDU session for an application performing S&F operation, the terminal may start an S&F data retention timer. Until this timer expires, the terminal may assume that the data the terminal transmitted may be stored in the satellite. The terminal may manage/control other timers related to uplink transmission so that uplink transmission is not processed as failed until a response related to the traffic is received.
c. A base station (e.g., NG-RAN) may receive S&F data storage quota per UE information. In this case, the base station may perform rate control of uplink data sent to the network per UE. Particularly in the case of an on-board base station mounted on a satellite, while the base station performs buffering management/control operations, the base station may allocate buffer size based on S&F data storage quota per UE information.
d. A base station may receive S&F data retention period per UE information. In this case, the base station may control the retention period of uplink data transmitted to the network per UE. When the base station is an on-board base station mounted on a satellite, while the base station performs buffering management/control operations, the base station may set the time for buffering data based on S&F data retention period per UE information.

7. A control network node (e.g., SMF) may generate N4 rules. For example, a control network node (e.g., SMF) may generate packet buffering and packet discarding policies for managing onboard UPF mounted on satellites based on Store and Forward satellite specific information. For reference, UPF or edge servers among 5GC may also be mounted on satellites. Additionally, AMF and/or SMF related to the control plane of 5GC may also be mounted on satellites.

8. The packet buffering and packet discarding policies generated by the SMF (e.g., policies for managing onboard UPF) may be delivered to onboard UPF in the form of conventional N4 rules. The onboard UPF may perform QoS management and store and forward operations based on the policies.

9. Information related to store and forward operations monitored in the 5GC due to the above procedures may be transmitted to the AF. For example, based on conventional QoS monitoring/network exposure procedures, information related to store and forward operations monitored in the 5GC may be delivered/reported to the AF. The AF that receives QoS-related measurement/report information from the 5GC may directly/implicitly determine the amount of dropped packets based on this information. Therefore, the AF may update the S&F satellite specific parameters transmitted in step 2. To improve user QoE from the application perspective, the AF may perform such update operations as subsequent operations.

For example, in step 9, monitoring information may be delivered through the following paths.

As an example, information monitored by a base station may be transmitted by the NG-RAN to the SMF through the control plane. The SMF may transmit monitoring information to the PCF. The PCF may transmit monitoring information to the AF or transmit monitoring information to the AF via the NEF.

As another example, information monitored by the On-board UPF may be transmitted by the UPF to the AF. For example, the UPF may transmit monitoring information to the AF based on Nupf_EventExposure service operations.

The following drawings are created to explain specific embodiments of the present disclosure. The names of the specific devices or the names of the specific signals/messages/fields shown in the drawings are provided by way of example, and thus the technical features of the present disclosure are not limited to the specific names used in the following drawings.

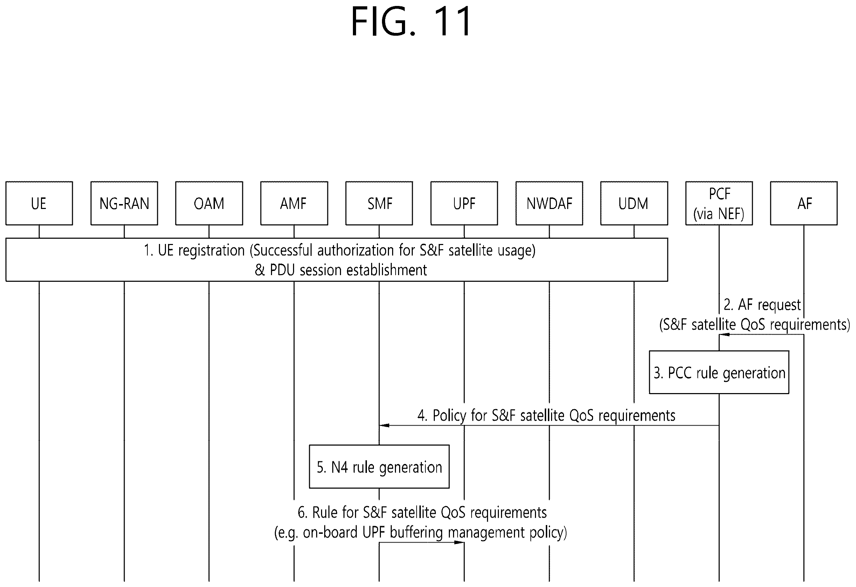

FIG. 11 shows a second example of S&F related procedures according to an embodiment of the present disclosure.

Hereinafter, the example of FIG. 11 is described. FIG. 11 will be described focusing on the differences between the example of FIG. 10 and the example of FIG. 11. For reference, steps 1 and 2 of the example of FIG. 11 may be performed in the same manner as steps 1 and 2 of FIG. 10. For reference, steps 5 and 6 of the example of FIG. 11 may be performed in the same manner as steps 7 and 8 of the example of FIG. 10.

In the case of the example of FIG. 11, the AF request may be delivered to the PCF via the NEF. For example, in step 3, the PCF may generate PCC rules including Store and Forward satellite specific QoS policy.

For reference, in the present disclosure, the trusted AF of 5GC may be directly connected to the PCF. When the AF is an AF of an external partner network, the AF may be connected to the PCF via the NEF.

The policy generated in this way (e.g., policy for S&F satellite QoS requirements) may be delivered to the SMF in step 4 according to conventional procedures.

In step 5, the SMF may generate N4 rules.

In step 6, the SMF may deliver N4 rules to the UPF. N4 rules may be rules for S&F satellite QoS requirements. In particular, the on-board UPF may utilize N4 rules as packet buffering and packet discarding policies for Store and Forward operations, as in the example of FIG. 10.

As described in step 9 of FIG. 10, information related to store and forward operations monitored in the 5GC due to the above procedures may be transmitted to the AF. For example, based on conventional QoS monitoring/network exposure procedures, information related to store and forward operations monitored in the 5GC may be delivered/reported to the AF. The AF that receives QoS-related measurement/report information from the 5GC may directly/implicitly determine the amount of dropped packets based on this information. Therefore, the AF may update the S&F satellite specific parameters transmitted in step 2. To improve user QoE from the application perspective, the AF may perform such update operations as subsequent operations.

The following drawings are created to explain specific embodiments of the present disclosure. The names of the specific devices or the names of the specific signals/messages/fields shown in the drawings are provided by way of example, and thus the technical features of the present disclosure are not limited to the specific names used in the following drawings.

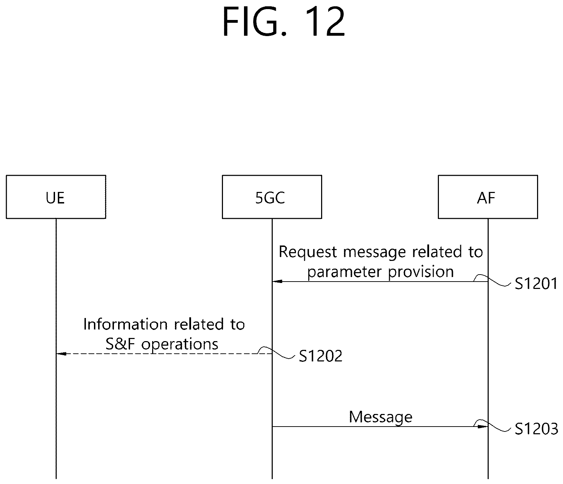

FIG. 12 shows an example of operations related to S&F satellites according to an embodiment of the present disclosure.

For reference, the procedure shown in FIG. 12 is merely an example, and the scope of the present disclosure is not limited by the example of FIG. 12.

For example, operations described in the examples of FIGS. 1 to 11 may also be applied to the example of FIG. 12. For example, even operations, contents, etc., not directly described in the example of FIG. 12, operations, contents, etc., described in various examples of the present disclosure may be applied.

The UE may perform a registration procedure to receive authorization to perform S&F operations with satellites. For example, the UE may transmit a registration request message for authorization related to Store and Forward (S&F) operations of the satellite to the 5GC. The UE may receive a registration accept message from the 5GC.

In step S1201, the AF may transmit a request message related to parameter provision to the 5GC. For example, the AF may transmit an AF request message to a first network entity of the core network (e.g., 5GC) via the NEF, as in the examples of FIGS. 10 and 11.

Here, the first network entity may be the UDM or PCF.

The request message may include one or more parameters related to S&F operations. The one or more parameters related to S&F operations may have the same meaning as the S&F satellite specific parameters described in various examples of the present disclosure.

The one or more parameters may include one or more of: data retention period related to the S&F operation; data storage quota related to the S&F operation; satellite backhaul category supporting the S&F operation; satellite ID supporting the S&F operation; on-board satellite backhaul category related to the S&F operation; or on-board satellite ID related to the S&F operation.

The NEF may transmit one or more parameters related to S&F operations to the UDM.

In step S1202, the 5GC may transmit information related to S&F operations to the UE. For example, as described in step 9 of the examples of FIGS. 10 and 11, when monitoring data related to S&F operations exists, the 5GC may transmit the monitored data to the AF.

Here, the information related to S&F operations may be the same as the one or more parameters of step S1201, or may be part of the one or more parameters of step S1201.

The UE may perform applications related to the S&F operations based on the one or more parameters related to the S&F operations.

In step S1203, the 5GC may transmit a message including monitoring data related to S&F operations to the AF. For example, the NEF may receive monitoring data from other network entities, and the NEF may transmit the monitored data to the AF.

For example, the NEF or the first network entity or a second network entity may transmit a message including monitoring data to the AF. Here, the second network entity may be the UPF.

According to an embodiment of the present disclosure, the NEF may receive Store and Forward satellite specific parameters from a network node related to application (e.g., AF). The NEF may update subscription information to the UDM. Here, Store and Forward satellite specific parameters may be a combination of one or more of the parameters as shown in the example of Table 3 of the present disclosure.

According to an embodiment of the present disclosure, the satellite access or on-board UPF may perform Store and Forward operation by applying packet buffering and packet discarding policies based on information provisioned from application-related network nodes (e.g., AF). The satellite access or on-board UPF may be the entity that performs satellite store and forward operations.

The present disclosure can have various advantageous effects.

For example, according to the present disclosure, 5G evolution/6G systems in expanded zero-touch configuration/operation environments with network automation can be implemented. Satellite access can effectively support store and forward functionality. Network provisioning parameters necessary for operations based on store and forward functionality can be defined. Procedures for provisioning network provisioning parameters to networks and terminals are defined. In particular, beyond the configuration of network operators providing mobile communication services, parameter provisioning based on dynamic requests from AF of 3rd party business partners can be performed. Accordingly, networks can provide services utilizing satellites more dynamically.

According to the present disclosure, store and forward functionality of satellite access targeting 5G evolution/6G systems can be implemented. For example, network provisioning parameters necessary for satellite access to operate based on store and forward functionality and procedures for provisioning those parameters to networks and terminals are proposed. For example, parameter provisioning based on dynamic requests from AF of 3rd party business partners can be performed, not only network operator configuration. According to examples of the present disclosure, based on parameter provisioning, networks can provide services utilizing satellites more dynamically.

Advantageous effects which can be obtained through specific embodiments of the present disclosure are not limited to the advantageous effects listed above. For example, there may be a variety of technical effects that a person having ordinary skill in the related art can understand and/or derive from the present disclosure. Accordingly, the specific effects of the present disclosure are not limited to those explicitly described herein, but may include various effects that may be understood or derived from the technical features of the present disclosure.

For reference, operations of terminals (e.g., UE) described in the present disclosure may be implemented by the devices of FIGS. 1 to 3 described above. For example, the terminal may be the first device 100 or second device 200 of FIG. 2. For example, operations of the terminal described in the present disclosure may be processed by one or more processors 102 or 202. Operations of the terminal described in the present disclosure may be stored in one or more memories 104 or 204 in the form of instructions/programs (e.g., instruction, executable code) executable by one or more processors 102 or 202. One or more processors 102 or 202 may control one or more memories 104 or 204 and one or more transceivers 105 or 206, and execute instructions/programs stored in one or more memories 104 or 204 to perform operations of the terminal (e.g., UE) described in the present disclosure.

Additionally, instructions for performing operations of the terminal described in the present disclosure may be stored in a non-volatile computer-readable storage medium that records them. The storage medium may be included in one or more memories 104 or 204. Instructions recorded in the storage medium may be executed by one or more processors 102 or 202 to perform operations of the terminal described in the present disclosure.

For reference, operations of network nodes (e.g., AMF, SMF, UPF, UDM, AF, UPF, NEF, NWDAF, etc.) or base stations (e.g., NG-RAN, satellite base stations, satellites, etc.) described in the present disclosure may be implemented by devices of FIGS. 1 to 3 to be described below. For example, the network node or base station may be the first device 100 or second device 200 of FIG. 2. For example, operations of the network node or base station described in the present disclosure may be processed by one or more processors 102 or 202. Operations of the terminal described in the present disclosure may be stored in one or more memories 104 or 204 in the form of instructions/programs (e.g., instruction, executable code) executable by one or more processors 102 or 202. One or more processors 102 or 202 may control one or more memories 104 or 204 and one or more transceivers 106 or 206, and execute instructions/programs stored in one or more memories 104 or 204 to perform operations of the network node or base station described in the present disclosure.

Additionally, instructions for performing operations of the network node or base station described in the present disclosure may be stored in a non-volatile (or non-transitory) computer-readable storage medium that records them. The storage medium may be included in one or more memories 104 or 204. Instructions recorded in the storage medium may be executed by one or more processors 102 or 202 to perform operations of the network node or base station described in the present disclosure.

While preferred embodiments have been described exemplarily above, the present disclosure is not limited to such specific embodiments, and may be modified, changed, or improved in various forms within the scope described in the spirit and claims of the present disclosure.

In the exemplary systems described above, methods are described based on flowcharts as a series of steps or blocks, but are not limited to the order of the described steps, and some steps may occur in different orders or simultaneously with other steps than described above. Additionally, those skilled in the art will understand that the steps shown in the flowcharts are not exclusive, and other steps may be included or one or more steps of the flowcharts may be deleted without affecting the scope of rights.

Claims in the present disclosure can be combined in a various way. For instance, technical features in method claims of the present disclosure can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method. Other implementations are within the scope of the following claims.

## Claims

1. A method for an Application Function (AF) to perform a satellite-related communication, comprising:
transmitting a request message related to a parameter provision to a first network entity of a core network via a NEF,
wherein the request message includes one or more parameters related to Store and Forward (S&F) operations of a satellite; and
receiving a message from the NEF or the first network entity or a second network entity of the core network,
wherein the one or more parameters are transmitted based on a User Equipment (UE) having performed a registration procedure for authorization related to the S&F operations of the satellite.

2. The method of claim 1, wherein:
the one or more parameters related to the S&F operations are delivered to the first network entity by the NEF, and
the first network entity is a Unified Data Management (UDM) or a Policy Control Function (PCF).

3. The method of claim 1 or 2, wherein:
the message received from the first network entity or the second network entity or the NEF includes monitoring information related to the S&F operations monitored in the core network.

4. The method of any one of claims 1 to 3, wherein the one or more parameters include one or more of:
a data retention period related to the S&F operations;
a data storage quota related to the S&F operations;
a satellite backhaul category supporting the S&F operations;
a satellite ID supporting the S&F operations;
an on-board satellite backhaul category related to the S&F operations; or
an on-board satellite ID related to the S&F operations.

5. The method of any one of claims 1 to 4, wherein:
the first network entity is a UDM or a PCF, and
the second network entity is a User Plane Function (UPF).

6. An Application Function (AF) that performs a satellite-related communication, the AF comprising:
one or more transceivers;
one or more processors; and
one or more memories storing instructions and operably connectable to the one or more processors,
wherein operations performed based on the instructions being executed by the one or more processors comprise the method according to any one of claims 1 to 5.

7. A method for performing a satellite-related communication, the method performed by an Network Exposure Function (NEF) and comprising:
receiving a request message related to a parameter provision from an Application Function (AF),
wherein the request message includes one or more parameters related to Store and Forward (S&F) operations of a satellite; and
transmitting a message related to the parameter provision including the one or more parameters to a first network entity of the core network,
wherein the one or more parameters are received from the AF based on a User Equipment (UE) having performed a registration procedure for authorization related to the S&F operations of the satellite.

8. The method of claim 7, further comprising:
transmitting a message including monitoring information related to the S&F operations monitored in the 5GC to the AF.

9. The method of claim 7 or 8, wherein the one or more parameters include one or more of:
a data retention period related to the S&F operations;
a data storage quota related to the S&F operations;
a satellite backhaul category supporting the S&F operations;
a satellite ID supporting the S&F operations;
an on-board satellite backhaul category related to the S&F operations; or
an on-board satellite ID related to the S&F operations.

10. The method of any one of claims 7 to 9, wherein:
the first network entity is a Unified Data Management (UDM) or a Policy Control Function (PCF).

11. A Network Exposure Function (NEF) configured to operate in a wireless communication system, the NEF comprising:
one or more transceivers;
one or more processors; and
one or more memories storing instructions and operably connectable to the one or more processors,
wherein operations performed based on the instructions being executed by the one or more processors comprise the method according to any one of claims 7 to 10.

12. A method for performing a satellite-related communication, the method performed by a User Equipment (UE) and comprising:
transmitting a registration request message for authorization related to Store and Forward (S&F) operations of a satellite to a core network;
receiving a registration accept message from the core network; and
receiving one or more parameters related to the S&F operations from the core network.

13. The method of claim 12, wherein the one or more parameters include one or more of:
a data retention period related to the S&F operations;
a data storage quota related to the S&F operations;
a satellite backhaul category supporting the S&F operations;
a satellite ID supporting the S&F operations;
an on-board satellite backhaul category related to the S&F operations; or
an on-board satellite ID related to the S&F operations.

14. The method of claim 13, further comprising:
transmitting uplink data of an application related to the S&F operations to the satellite based on the one or more parameters related to the S&F operations.

15. The method of claim 13 or 14, further comprising:
transmitting uplink data of an application related to the S&F operations to the satellite so as not to exceed the data storage quota, based on the one or more parameters including the data storage quota related to the S&F operations.

16. The method of claim 13 or 14, further comprising:
transmitting uplink data of an application related to the S&F operations to the satellite based on the one or more parameters including the data retention period related to the S&F operations,
wherein a timer based on the data retention period is operated based on the uplink data being transmitted.

17. A User Equipment (UE) that performs a satellite-related communication, the UE comprising:
one or more transceivers;
one or more processors; and
one or more memories storing instructions and operably connectable to the one or more processors,
wherein operations performed based on the instructions being executed by the one or more processors comprise the method according to any one of claims 12 to 16.
